(19) Europäisches Patentamt
European Patent Office
Office européen des brevets

(11) EP 0 656 914 B1

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(21) Anmeldenummer: **93917793.7**

(22) Anmeldetag: **16.08.1993**

(51) Int Cl.[6]: **C08G 12/18**, C11D 3/37

(86) Internationale Anmeldenummer:
**PCT/EP93/02176**

(87) Internationale Veröffentlichungsnummer:
**WO 94/04585 (03.03.1994 Gazette 1994/06)**

# (54) VERFAHREN ZUR HERSTELLUNG VON POLYACETALEN, IHRE VERWENDUNG UND DIE HERGESTELLTE POLYACETALE

PROCESS FOR PRODUCING POLYACETALS, THEIR USE AND THE POLYACETALS PRODUCED

PROCEDE DE FABRICATION DE POLYACETALS, LEUR UTILISATION ET LES POLYACETALS REALISES

(84) Benannte Vertragsstaaten:
**BE CH DE ES FR GB IT LI NL**

(30) Priorität: **25.08.1992 DE 4228159**

(43) Veröffentlichungstag der Anmeldung:
**14.06.1995 Patentblatt 1995/24**

(73) Patentinhaber: **BASF Aktiengesellschaft**
**67063 Ludwigshafen (DE)**

(72) Erfinder:
- **FUNHOFF, Angelika**
  **D-6900 Heidelberg (DE)**
- **MC KEE, Graham, Edmund**
  **D-6940 Weinheim (DE)**
- **HARTMANN, Heinrich**
  **D-6703 Limburgerhof (DE)**
- **BAUR, Richard**
  **D-6704 Mutterstadt (DE)**
- **KUD, Alexander**
  **D-6509 Eppelsheim (DE)**
- **SCHWENDEMANN, Volker**
  **D-6730 Neustadt (DE)**

(56) Entgegenhaltungen:
**EP-A- 0 015 024**
**EP-A- 0 216 741**
**US-A- 4 219 437**
**US-A- 4 225 685**
**US-A- 4 302 564**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 656 914 B1

## Beschreibung

Die Erfindung betrifft ein Verfahren zur Herstellung von Polyacetalen durch Copolymerisieren von Glyoxylsäureestern mit anderen copolymerisierbaren Monomeren in Gegenwart von anionischen oder kationischen Polymerisationsinitiatoren und gegebenenfalls Hydrolyse der in das Copolymerisat einpolymerisierten Glyoxylsäureester, die Verwendung der so erhältlichen Copolymerisate als Zusatz zu Wasch- und Reinigungsmitteln, als Mittel zur Wasserbehandlung und als Dispergiermittel für feinteilige Stoffe sowie neue Polyacetale.

Aus der EP-B-0 001 004 sind polymere Acetalcarboxylate der Formel

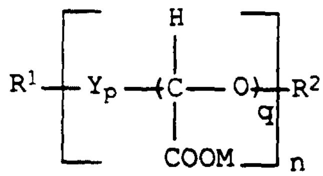

(I)

bekannt, in der

Y mindestens ein Comonomer bedeutet, das im Polymerisat statistisch verteilt ist,

p = 0 bis 2,

q = mindestens 1,

$R^1$ und $R^2$ für chemisch stabile Gruppen stehen, die die Polymeren gegen einen Abbau im alkalischen pH-Bereich stabilisieren,

n = 10 bis 200 und

M = Alkalimetall, Ammonium oder $C_1$- bis $C_4$-Alkyl und Alkanolamin mit 1 bis 4 C-Atomen ist.

Die Polyacetalcarboxylate werden durch Homopolymerisation von Glyoxylsäureestern oder durch Copolymerisation von Glyoxylsäureestern mit damit copolymerisierbaren Verbindungen, wie Epoxiden, Aldehyden, Carboxylgruppen enthaltenden Verbindungen und Mischungen der genannten Verbindungen in Gegenwart von kationischen Katalysatoren, wie Bortrifluoridetheraten oder anionischen Initiatoren, wie Natriummethyldiethylmalonat hergestellt. Um die so erhältlichen Polyacetale gegen den Abbau im alkalischen pH-Bereich zu stabilisieren, lagert man an die Enden der Polymerisatketten chemisch stabile Gruppen an, z.B. können die Substituenten $R^1$ und $R^2$ in Formel I eine Alkyl-, Hydroxyalkyl- oder Carboxymethylgruppe darstellen. Die Polyacetalcarboxylate der Formel I werden als Builder in Wasch- und Reinigungsmitteln verwendet. Die Polyacetalcarboxylate sind biologisch abbaubar.

Aus der US-A-4 169 934 sind Copolymerisate der allgemeinen Formel

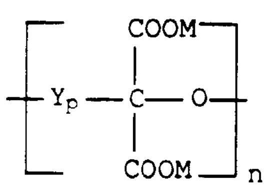

(II)

bekannt, in der

p mindestens 1, n mindestens 2, Y mindestens ein Monomer aus der Gruppe der Olefine und der Aldehyde mit 1 bis 3 C-Atomen bedeuten und M die in Formel I angegebene Bedeutung hat.

Gemäß Beispiel 1 der genannten Patentschrift wird Dimethylketomalonat in Methylenchlorid gelöst und bei einer Temperatur von etwa 0°C unter Verwendung von Natriumdiethylmethylmalonat als Initiator mit Formaldehyd copolymerisiert. Im Anschluß an die Copolymerisation gibt man Trifluoressigsäure und Ethylvinylether zur Mischung und

hydrolysiert die Estergruppen des Copolymerisats durch Zugabe von wäßriger Natronlauge. Die so erhältlichen Natriumsalze der Copolymerisate werden als Builder in Waschmitteln verwendet. Die Copolymerisate sind unter alkalischen Bedingungen stabil, depolymerisieren jedoch in saurem Medium unter Bildung von biologisch abbaubaren Bruchstükken. Der Formaldehyd wird bei dem in der US-A-4 169 934 beschriebenen Herstellverfahren gasförmig in die polymerisierende Mischung eingebracht. Die Verwendung von flüssigem Formaldehyd als Comonomer erscheint zwar prinzipiell möglich, kommt jedoch in der Technik wegen der Neigung von wasserfreiem Formaldehyd zur explosionsartig verlaufenden Polymerisation nicht in Betracht. Wasserfreier Formaldehyd kann nach dem in Houben-Weyl, Band E30, Teil 2, Georg Thieme Verlag, S. 1393 (1987) angegebenen Reaktionsschema sowohl kationisch als auch anionisch polymerisiert werden.

Der Erfindung liegt die Aufgabe zugrunde, ein verbessertes Verfahren zur Herstellung von Polyacetalen durch Copolymerisation von Glyoxylsäureestern mit Formaldehyd und gegebenenfalls anderen damit copolymerisierbaren Monomeren zur Verfügung zu stellen. Eine weitere Aufgabe der Erfindung liegt darin, Waschhilfsmittel, Wasserbehandlungsmittel und Dispergiermittel für feste Stoffe aufzuzeigen. Eine weitere Aufgabe der Erfindung besteht darin, neue Stoffe zur Verfügung zu stellen.

Die zuerst genannte Aufgabe wird gelöst mit einem Verfahren zur Herstellung von Polyacetalen durch Copolymerisieren von

(a) Glyoxylsäureestern mit

(b) anderen copolymerisierbaren Monomeren

in Gegenwart von anionischen oder kationischen Polymerisationsinitiatoren und gegebenenfalls Einführung von stabilen Endgruppen und gegebenenfalls Hydrolyse der in das Copolymerisat einpolymerisierten Monomeren (a), wenn man als Monomere (b) cyclische, von Diolen abgeleitete Formale, Homopolymerisate des Formaldehyds, Trioxepan oder Mischungen dieser Verbindungen einsetzt, wobei bis zu 50 Gew.-% dieser Gruppe von Monomeren durch andere übliche copolymerisierbare Monomere (c) ersetzt sein können.

Die zweite Aufgabe wird dadurch gelöst, daß man die nach dem neuen Verfahren erhältlichen Polyacetale als Zusatz zu phosphatarmen und phosphatfreien Wasch- und Reinigungsmitteln, als Mittel zur Wasserbehandlung und als Dispergiermittel für feinteilige Stoffe verwendet.

Die zuletzt genannte Aufgabe wird gelöst mit Polyacetalen, die erhältlich sind durch anionisch oder kationisch initiierte Polymerisation von

(a) Glyoxylsäureestern mit

(b) cyclischen von Diolen abgeleiteten Formalen mit Ausnahme von solchen cyclischen Formalen, die sich von 1,2-Diolen ableiten, wobei gegebenenfalls bis zu 50 Gew.-% dieser Gruppe von Monomeren durch andere übliche copolymerisierbare Monomere ersetzt sein können, und

gegebenenfalls Einführung von stabilen Endgruppen und gegebenenfalls Hydrolyse der Estergruppen der in die Copolymerisate einpolymerisierten Monomeren (a).

Als Komponente (a) kommen Glyoxylsäureester in Betracht, die beispielsweise durch Veresterung von Glyoxylsäure mit $C_1$- bis $C_{20}$-Alkoholen erhältlich sind, z.B. Glyoxylsäuremethylester, Glyoxylsäureethylester, Glyoxylsäure-n-propylester, Glyoxylsäure-isopropylester, Glyoxylsäure-n-butylester, Glyoxylsäure-isobutylester, Glyoxylsäurestearylester und Glyoxylsäure-palmitylester. Besonders bevorzugt ist die Verwendung von Glyoxylsäuremethylester und Glyoxylsäureethylester. Die Verbindungen der Komponente (a) werden in praktisch wasserfreier Form polymerisiert. Sofern die Aldehydgruppe der Ester als Halbacetal vorliegen sollte, so ist die Alkoholeinheit z.B. durch Behandlung mit Phosphorpentoxid zu eliminieren und der entstandene Aldehyd destillativ zu reinigen.

Als Monomere der Komponente (b) kommen gemäß Erfindung cyclische, von Diolen abgeleitete Formale in Betracht. Die cyclischen Formale sind dadurch erhältlich, daß man Diole mit Formaldehyd umsetzt. So erhält man beispielsweise aus Ethylenglycol und Formaldehyd Dioxolan. Weitere geeignete cyclische Formale sind 1,3-Propandiolformal, 1,2-Propandiolformal, 1,4-Butandiolformal, 1,3,6-Trioxocan (Reaktionsprodukt aus Diethylenglycol und Formaldehyd) und 1,5-Pentandiolformal.

Außerdem eignen sich als Komponente (b) Homopolymerisate des Formaldehyds, z.B. Trioxan und andere cyclische Oligomere des Formaldehyds, z.B. 1,3,5,7-Tetraoxocan sowie Polyformaldehyd. Als Monomere der Gruppe (b) kommt außerdem Trioxepan in Betracht, das durch Umsetzung von Dioxolan und Formaldehyd unter Säurekatalyse hergestellt werden kann. Die Verbindungen der Gruppe (b) können allein oder in Mischung von 2 oder mehreren Komponenten dieser Gruppe bei der Copolymerisation eingesetzt werden.

Die Monomeren der Gruppe (a) können in jedem beliebigen Verhältnis mit den Monomeren der Gruppe (b) copolymerisiert werden. Z.B. kann man bei der Copolymerisation die Monomeren (a) in einer Menge von 1 bis 99, vorzugsweise 50 bis 95 Gew.-% und die Monomeren (b) in einer Menge von 99 bis 1, vorzugsweise 5 bis 50 Gew.-% einsetzen. Die Monomeren der Gruppe (b) können gegebenenfalls bis zu 50 Gew.-% durch anderen übliche mit den Monomeren (a) copolymerisierbare Monomere, im folgenden Monomere (c) genannt, ersetzt sein. Geeignete Monomere (c) sind beispielsweise in der eingangs zitierten EP-B-0 001 004 genannt. Bei diesen Comonomeren handelt es sich um Epoxide, Aldehyde mit mindestens 2 C-Atomen, Tetrahydrofuran und/oder $C_2$- bis $C_4$-Olefine. Einzelne Verbindungen sind beispielsweise Ethylenoxid, Propylenoxid, Butylenoxid, Styroloxid, Ethylen, Propylen, Isobuten, Tetrahydrofuran, Glycidylverbindungen, Cyclohexenoxid, epoxidierte Fettsäureester, z.B. Acrylsäure- und Methacrylsäureglycidylester, Glycidol, Acetaldehyd, n-Propionaldehyd, n-Butyraldehyd, Isobutyraldehyd, n-Pentanal, n-Hexanal, Acrolein, Methacrolein, Crotonaldehyd, auch Isomerengemische; Hydroxypivalaldehyd sowie auch vernetzende Aldehyde wie Glyoxal.

Als Polymerisationsinitiatoren kommen anionische oder kationische Starter in Betracht, die ebenfalls in der eingangs genannten EP-B-0 001 004 genannt sind. Geeignete anionische Polymerisationsinitiatoren sind beispielsweise die Natriumderivate von Malonsäurediethylester, Methylmalonsäurediethylester oder Methylmalonsäuredimethylester. Die Natriumderivate dieser Ester werden beispielsweise durch Umsetzung der Ester mit Natriumhydrid hergestellt. Außerdem eignen sich als anionische Polymerisationsinitiatoren Amine, wie Triethylamin, 1,4-Diazabicyclo-[2,2,2]-octan, Pyrrocolin und Chinolizidin, Alkanolamine wie Triethanolamin, Alkalimetallbasen wie Natronlauge, Kalilauge und Lithiumhydroxid sowie Erdalkalimetallbasen, beispielsweise Kalziumhydroxid, Kalziumoxid, Bariumhydroxid und Bariumoxid oder deren Mischungen, oder Erdalkalihydride wie Calciumhydrid.

Geeignete kationische Initiatoren sind beispielsweise Bortrifluoridetherate, z.B. der Komplex aus Bortrifluorid und Diethylether oder Komplexe aus Bortrifluorid und Phenol. Außerdem kann $BF_3$ allein die Polymerisation initiieren. Man kann jedoch auch Initiatormischungen aus mehreren kationischen oder aus mehreren anionischen Initiatoren verwenden. Die Mengen an Initiatoren betragen jeweils 5 bis 500 ppm, bezogen auf die eingesetzten Monomeren. Die Katalysatoren können jedoch auch in Konzentrationen bis zu etwa 1 Gew.-% und darüber angewendet werden.

Die Copolymerisation wird vorzugsweise in einem inerten organischen Lösemittel durchgeführt, z.B. Acetonitril, Methylenchlorid, Pentan, Hexan, Cyclohexan, Toluol, Dioxan, Diethylenglykoldimethylether, Ethylenglykoldimethylether, Propionitril, Benzonitril und i-Butyronitril. Man kann auch Mischungen aus 2 oder mehreren Lösemitteln verwenden oder die Copolymerisation in Abwesenheit von Lösemitteln durchführen.

Die Temperatur bei der Copolymerisation liegt im Bereich von -20 bis 100°C, vorzugsweise 0 bis 70°C. Nach Abschluß der Polymerisation werden die Enden der Polymerisatketten mit chemisch stabilen Gruppen verschlossen, indem man an die Polyacetale gegen Abbau im alkalischen pH-Bereich stabile Gruppen anlagert. Gruppen dieser Art sind beispielsweise Alkylgruppen wie Methyl-, Ethyl-, Propyl-, Butylgruppen und andere wie Decyl-, Dodecyl- oder Cycloalkylgruppen; Alkene wie Ethylen, Propylen, Butylen und höhere 5 Olefine, ebenso verzweigte Kohlenwasserstoffe wie 2-Methylbutan oder aromatische Kohlenwasserstoffe wie Toluol, Xylol und cyclische Kohlenwasserstoffe wie Cyclohexan und Cyclohexen; Alkohole wie Methanol, Ethanol, Glykol, Butandiol; Mercaptane wie Methanthiol, 1,2-Ethandithiol; Ether wie Dimethoxymethylen, ebenso carboxylgruppenhaltige Verbindungen wie substituierte Malonsäureester oder Salze und Anhydride wie Essigsäureanhydrid.

Zum Einführen der stabilen Endgruppen gibt man beispielsweise zum Reaktionsgemisch folgende Verbindungen zu, die sich an die Enden der Polymerketten addieren:

Vinylether wie Vinylethylether, Dihydropyrane, Alkylierungsmittel wie Dimethylsulfat, Methyljodid, Ether wie Dimethoxymethylen, Epichlorhydrin, Epoxybernsteinsäureester und/oder Epoxibuttersäureester.

Die Stabilisierung durch Anlagerung von speziellen Gruppen an die Polyacetale ist nicht zwingend und wird nur in den Fällen durchgeführt, in denen erhöhte Anforderungen an die Stabilität der Polyacetale im alkalischen pH-Bereich gestellt werden. Bei der anionisch initiierten Polymerisation werden vorzugsweise immer Endgruppen zur Stabilisierung in die Polymerisate eingeführt. Die Copolymerisate können direkt aus der Reaktionsmischung isoliert oder auch einer Hydrolyse unterworfen werden. Hierzu behandelt man die Copolymerisate in wäßrigem Medium mit Basen, z.B. Alkalimetallbasen, wie Natronlauge, Kalilauge, Soda oder Kaliumcarbonat, mit Erdalkalimetallbasen, wie Kalziumhydroxid oder Bariumhydroxid oder mit Ammoniak und Aminen wie Triethanolamin, Ethanolamin oder Triethylamin oder Mischungen von verschiedenen Basen. Man erhält dann die Salze der Copolymerisate, von denen insbesondere die Alkalimetall- und Ammoniumsalze für die praktische Anwendung von Bedeutung sind. Aus den Salzen können Polyacetale hergestellt werden, die freie Carboxylgruppen enthalten.

Die hydrolysierten Copolymerisate werden als Zusatz zu phosphatarmen und phosphatfreien Wasch- und Reinigungsmitteln verwendet. Unter phosphatarmen Waschmitteln sollen solche Waschmittel verstanden werden, deren Phosphatgehalt weniger als 25 Gew.-%, berechnet aus Natriumtriphosphat, beträgt. Die Zusammensetzung der Wasch- und Reinigungsmittelformulierungen kann sehr unterschiedlich sein. Wasch- und Reinigungsformulierungen enthalten üblicherweise 2 bis 50 Gew.-% Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in

Chemical and Eng. News, Band 67, 35 (1989), tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Außerdem sind solche Waschmittelformulierungen von Interesse, die bis zu 60 Gew.-% eines Alkalisilikats und bis zu 10 Gew.-% eines erfindungsgemäß hergestellten Polyacetals enthalten.

Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die Polyacetale werden in Waschmitteln in Mengen von 0,5 bis 20, vorzugsweise 2 bis 10 Gew.-% eingesetzt.

Die hydrolysierten und neutralisierten Polyacetale werden außerdem als Mittel zur Wasserbehandlung eingesetzt. Sie verhindern wirksam die Ausbildung von störenden Belägen in wasserführenden Anlagenteilen, wie Kühlern, Boilern und Verdampfern. Ein Beispiel für eine derartige Anwendung ist der Einsatz der Produkte bei der Meerwasserentsalzung in Verdampfungsanlagen. Bezogen auf Wasser werden die Polyacetale in Mengen von 1 bis 1000, vorzugsweise 2 bis 100 ppm eingesetzt.

Die hydrolysierten und neutralisierten Polyacetale eignen sich außerdem als Dispergiermittel für feinteilige Stoffe, z.B. Tone, Kreide, Kalziumcarbonat, Titandioxid, Eisenoxide, Kaoline, Aluminiumoxid, Zement und oxidische Glasuren für keramische Zwecke.

Bei der Anwendung als Dispergiermittel sind üblicherweise Mengen von 0,02 bis 1 Gew.-%, bezogen auf die feinteiligen Stoffe notwendig.

Durch anionische Copolymerisation von

(a) Glyoxylsäureestern mit

(b) cyclischen von Diolen abgeleiteten Formalen oder cyclischen Polymeren des Formaldehyds und

gegebenenfalls Hydrolyse der Estergruppen der in die Copolymerisate einpolymerisierten Monomeren (a) entstehen Carboxylatgruppen bzw. Carboxylgruppen tragende Polyacetale. Die Bildung von Polyacetalen dieser Art war nicht vorherzusehen, weil aus Houben-Weyl, Band E30, Teil 2, Georg Thieme Verlag, S. 1396 (1987) bekannt ist, daß beispielsweise 1,3,5-Trioxan und andere cyclische Oligomere des Formaldehyds nur kationisch initiiert polymerisiert werden. Beispielsweise entstehen aus Glyoxylsäuremethylester und Dioxolan Polyacetale, die folgende Struktureinheiten enthalten:

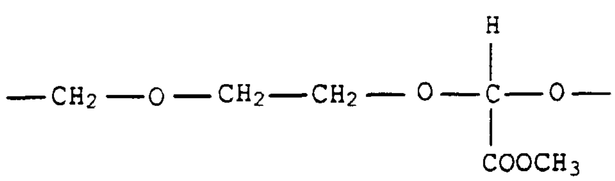
(III)

Für die Herstellung dieser Polyacetale kommen als Monomere der Gruppe (b) vorzugsweise Dioxolan, Butandiolformal und/oder 1,3,5-Trioxan in Betracht. Die durch anionische Polymerisation erhaltenen Polyacetale aus Glyoxylsäureestern mit cyclischen Formalen oder cyclischen Polymeren des Formaldehyds sind neue Stoffe. Sie haben einen geringeren Restmonomergehalt und höhere Molekulargewichte als diejenigen Glyoxylsäureester, die unter Verwendung von Formaldehyd als Monomer der Komponente (b) erhältlich sind. Die nach dem erfindungsgemäßen Verfahren erhältlichen Copolymerisate haben K-Werte (bestimmt nach H. Fikentscher in 1 gew.-%iger wäßriger Lösung am Na-Salz der Copolymerisate bei pH 7 und 25°C) von 8 bis 100, vorzugsweise 10 bis 80.

Die Prozentangaben in den Beispielen sind Gewichtsprozent. Die K-Werte wurden nach H. Fikentscher, Cellulose-Chemie, Band 13, 58-64 und 71-74 (1932) in wäßriger Lösung bei einer Temperatur von 25°C und einer Konzentration von 1 Gew.-% bei pH 7 am Natriumsalz der Polyacetale bestimmt.

Beispiel 1

In einem 100 ml fassenden Einhalskolben, der mit einem Magnetrührer und einer Vorrichtung für das Arbeiten unter Inertgasatmosphäre ausgestattet war, wurden unter einem Argonstrom 4,5 ml Acetonitril, 15,9 g (181 mmol) frisch destillierter Glyoxylsäuremethylester und 1,8 g (24 mmol) Dioxolan vorgelegt. Zu dieser Mischung fügte man auf einmal 14 µl (0,027 mmol) Natriumdiethylmethylmalonat. Es trat eine exotherme Reaktion ein. Die Reaktionstemperatur

wurde durch Kühlen des Reaktionsgemisches mit einem Eisbad auf unter 10°C gehalten. Das Reaktionsgemisch wurde bei einer Temperatur im Bereich von 3 bis 7°C innerhalb von 1,5 Stunden nachpolymerisiert. Anschließend wurde die Polymerlösung bei 0°C mit 4,6 g (59 mmol) Dimethoxymethan und 4,4 g (31 mmol) Phosphorpentoxid und danach nochmals mit 4,6 g Dimethoxymethan versetzt.

Nach einer Reaktionszeit von 3 Stunden gab man zum Reaktionsgemisch 60 ml 2 N Natronlauge, rührte die Mischung und dekantierte ab. Das Copolymerisat wurde dreimal mit je 30 ml gesättigter wäßriger Natronhydrogencarbonatlösung gewaschen und mit 25 ml 10 N Natronlauge verseift. Das Copolymerisat wurde aus einer Methanol/Aceton-Mischung im Volumenverhältnis 1:1 ausgefällt. Die Ausbeute betrug 90 %, bezogen auf das Natriumsalz des Copolymeren. Das hydrolysierte Produkt hatte einen K-Wert von 31.

Beispiel 2

In der in Beispiel 1 beschriebenen Apparatur wurden 14,1 g (160 mmol) Glyoxylsäuremethylester, 3,5 g (39 mmol) Trioxan und 4,5 ml Acetonitril vorgelegt. Anschließend fügte man 14 µl (0,027 mmol) Natriumdiethylmethylmalonat zu. Das Reaktionsgemisch erwärmte sich. Der Kolben wurde in ein Eisbad gestellt und die Reaktionsmischung 1,5 Stunden gerührt. Bei einer Innentemperatur von 0°C wurden abwechselnd 4,6 g (59 mmol) Dimethoxymethan, 4,4 g (31 mmol) Phosphorpentoxid und nochmals 4,6 g (59 mmol) Dimethoxymethan zugefügt. Danach wurde das Reaktionsgemisch noch 3 Stunden gerührt. Das Copolymerisat wurde dann mit 60 ml 2 N Natronlauge gewaschen, aufgerührt und die überstehende Lösung abdekantiert. Danach wurde das Copolymerisat dreimal mit 30 ml gesättigter wäßriger Natronhydrogencarbonatlösung gewaschen und durch Zugabe von 25 ml 10 N Natronlauge hydrolysiert und neutralisiert. Das Copolymerisat wurde aus einer Methanol/Aceton-Mischung im Volumenverhältnis 1:1 ausgefällt. Die Ausbeute an Natriumsalz des Copolymerisats war quantitativ. Der K-Wert des Copolymerisats betrug 29.

Beispiel 3

In der in Beispiel 1 beschriebenen Apparatur wurden 8,8 g (100 mmol) Glyoxylsäuremethylester, 8,8 g (119 mmol) Dioxolan und 4,5 ml Acetonitril vorgelegt und mit 14 µl (0,027 mmol) Natriumdiethylmethylmalonat versetzt. Das Reaktionsgemisch wurde dann auf 0°C abgekühlt und 1,5 Stunden bei dieser Temperatur gerührt. Die resultierende viskose Masse wurde danach mit 4,6 g (59 mmol) Dimethoxymethan, 4,4 g (31 mmol) Phosphorpentoxid und 4,6 g (59 mmol) Dimethoxymethan versetzt und 3 Stunden bei 0°C gerührt. Danach fügte man 60 ml 2 N Natronlauge zu, rührte um und dekantierte die wäßrige Lösung ab. Das verbleibende Copolymerisat wurde dreimal mit je 30 ml gesättigter wäßriger Natronhydrogencarbonatlösung gewaschen und anschließend mit 12 ml 10 N Natronlauge hydrolysiert und neutralisiert. Das Produkt wurde aus einer Methanol/Aceton-Mischung im Volumenverhältnis 1:1 ausgefällt. Die Ausbeute an hydrolysiertem und neutraiisiertem Copolymerisat betrug 44 %. Das Copolymerisat hatte einen K-Wert von 30.

Vergleichsbeispiel 1

In der in Beispiel 1 beschriebenen Apparatur wurden 15 ml Dichlormethan und 35,2 g (400 mmol) Glyoxylsäuremethylester vorgelegt und auf etwa 5°C abgekühlt. Dann gab man 1 ml einer 0,05 molaren Natriumdiethylmethylmalonatlösung zu. In die so erhaltene Mischung wurden dann 10 g (333 mmol) gasförmiger Formaldehyd eingeleitet. Es trat langsam eine exotherme Reaktion ein. Nach ca. 45 Minuten wurden unter Eisbadkühlung 22 ml Dimethoxymethan und 8,8 g (62 mmol) Phosphorpentoxid zugegeben und 3 Stunden bei 5°C gerührt. Anschließend wurde das Copolymerisat erst mit 120 ml 2 N Natronlauge gewaschen, dann dreimal mit je 60 ml gesättigter wäßriger Natriumhydrogencarbonatlösung und danach mit 25 ml 10 N Natronlauge verseift. Das Polymer wurde aus Aceton/Methanol (1/1) gefällt. Die Ausbeute an Natriumsalz des Copolymerisats betrug 23 %. Das verseifte Produkt besaß einen K-Wert von 8.

Vergleichsbeispiel 2 (in Analogie zu Beispiel 1 der US-A-4 169 934)

In der in Beispiel 1 beschriebenen Apparatur wurden 4 ml Dichlormethan und 17,4 g (0,1 M) Diethylketomalonat vorgelegt und auf 0°C abgekühlt. Dann wurden 0,5 ml einer 0,05 molaren Natrium-Diethylmethylmalonatlösung zugegeben und gasförmiger Formaldehyd in die Reaktionsmischung eingeleitet, wobei die Polymerisation ansprang. Die Reaktionsmischung wurde im Eisbad gerührt. Nach ca. 45 Minuten war die Temperatur der Reaktionsmischung wieder auf 0 - 2°C abgesunken und 0,18 ml (1,5 mol-%) Trifluoressigsäure und 3,5 ml Ethylvinylether wurden zur Mischung zugegeben. Die Mischung wurde über Nacht bei Raumtemperatur gerührt, dann ungefähr 2 ml 1 N Natronlauge zugeführt und die flüchtigen Bestandteile im Vakuum entfernt. Anschließend wurden 12 ml 5 N Natronlauge zugegeben und die Reaktionsmischung 2 Stunden bei 0°C gerührt. Danach wurde auf Raumtemperatur erwärmt. Der Niederschlag, der sich bei Zugabe der 5 N Natronlauge bildete, wurde abfiltriert und getrocknet. Das Präzipitat wurde in destilliertem Wasser gelöst, dann aus Methanol gefällt und abfiltriert. Die Ausbeute betrug 80 % der K-Wert war 9,5.

Vergleichsbeispiel 3

In der in Beispiel 1 beschriebenen Apparatur wurden 4,5 ml Dichlormethan und 17,6 g (200 mmol) Glyoxylsäuremethylester vorgelegt und auf 0°C abgekühlt. Dann wurden 13,9 µl Diethylmethylmalonat zugegeben, wodurch eine exotherme Reaktion ausgelöst wurde. Die Reaktionsmischung wurde im Eisbad noch 1,5 Stunden nachgerührt, dann bei 0°C mit 4,6 g (59,3 mmol) Dimethoxymethan und 4,4 g (31 mmol) Phosphorpentoxid versetzt. Anschließend fügte man nochmals 4,6 g (59,3 mmol) Dimethoxymethan zu. Die Mischungen wurde 3 Stunden bei dieser Temperatur nachgerührt, anschließend mit 60 ml 2 N Natronlauge und dreimal mit je 30 ml gesättigter Natriumhydrogencarbonatlösung gewaschen und mit 25 ml 10 N Natronlauge verseift. Das Polymer wurde aus einer Methanol/Aceton-Mischung (1/1) ausgefällt und besaß einen K-Wert von 43. Die Ausbeute war quantitativ.

Die oben beschriebenen Copolymerisate und das Homopolymerisat nach Vergleichsbeispiel 3 wurden als Waschmitteladditiv getestet. Sie wurden dazu in einer Menge von 5 Gew.-% in das im folgenden beschriebenen Waschmittel A eingearbeitet. Das Waschmittel A hatte folgende Zusammensetzung:

| Waschmittel A: | |
|---|---|
| | Gew.-Teile |
| Na-Dodecylbenzolsulfonat | 6,25 |
| $C_{13}/C_{15}$-Oxoalkohol alkoxyliert mit Ethylenoxid im Molverhältnis 1:7 | 4,70 |
| Mg-silikat | 1,25 |
| Na-carbonat (wasserfrei) | 10,00 |
| Na-metasilikat · 5 $H_2O$ | 6,00 |
| Na-perborat-tetrahydrat | 20,00 |
| Natriumsulfat (wasserfrei) | 6,75 |
| Seife | 2,80 |
| Na-Carboxymethylcellulose | 0,60 |
| Zeolith A | 30,00 |
| Polymer | 5,00 |
| Wasser Rest auf | 100,00 |

Mit der Waschmittelformulierung A wurden Testgewebe aus Baumwollgewebe gewaschen. Die Zahl der Waschzyklen betrug 15. Nach dieser Anzahl von Wäschen wurde der Aschegehalt des Gewebes ermittelt, indem man das Testgewebe jeweils veraschte (2 Stdn. bei 700°C).

Die Wirkung (W) von Waschmitteladditiven zu dieser Waschmittelformulierung A wird in Prozent-Wirksamkeit angegeben, wobei 0 % Wirkung dem Aschegehalt ohne Inkrustationsinhibitor (A-Ohne) (d.h. ohne Copolymerisatzusatz) entspricht und 100 % wirkung dem Aschegehalt des Gewebes vor dem Waschen (A-Null). Die Wirkung wird dann nach einem linearen mathematischen Ansatz aus dem Aschegehalt berechnet.

$$W = \left(1 - \frac{(A) - (A\text{-Null})}{(A\text{-Ohne}) - (A\text{-Null})}\right) \cdot 100\ \%$$

Der Aschegehalt des reinen Baumwollgewebes vor dem Waschen betrug 0,04 %. Der maximale Aschegehalt ohne Inhibitor (A-Ohne) betrug 6,91 %. Der Aschegehalt bei Verwendung des Polymeren wird mit A bezeichnet.

Versuchsbedingungen für die Ermittlung der Inkrustierung

| | |
|---|---|
| Gerät: | Launder-O-meter der Fa. Atlas, Chicago |
| Zahl der Waschzyklen: | 15 |
| Waschflotte: | 250 g, wobei das verwendete Wasser 4 mmol Härte pro Liter aufweist (Molverhältnis: Kalzium zu Magnesium gleich 4:1) |
| Waschdauer: | 30 min. bei 60°C (einschließlich Aufheizzeit) |

Waschmitteldosierung: 7 g/l

Flottenverhältnis: 1:12,5

Prüfgewebe: jeweils 20 g

Die absolute Wirkung in % bei Einsatz der nach den Beispielen und Vergleichsbeispielen hergestellten Polymerisaten ist in der folgenden Tabelle angegeben:

Tabelle

| Polymer hergestellt nach | | (%-) Wirkung der Polymeren im Waschmittel A |
|---|---|---|
| Beispiel | Vergleichsbeispiel | |
| 1 | - | 47,8 |
| 2 | - | 60,4 |
| 3 | - | 38,9 |
| - | 1 | 10,0 |
| - | 2 | 0 |
| - | 3 | 52,1 |
| Ohne Polymer | 4 | 0 |

Wie die Beispiele und Vergleichsbeispiele zeigen, ist die Wirksamkeit bezüglich der Inkrustationsinhibierung der Copolymeren aus Glyoxylsäureestern und cyclischen Ethern mit der der Homopolymerisate von Glyoxylsäureestern vergleichbar. Dies ist erstaunlich, weil nämlich zu erwarten war, daß der Einbau von nicht carboxylgruppentragenden Comonomeren einen Verlust der inkrustationsinhibierenden Wirkung mit sich bringen sollte.

Ein großer Vorteil der Copolymeren ist deren leichterer biologischer Abbau im Vergleich zu den Polyglyoxylaten.

**Patentansprüche**

1. Verfahren zur Herstellung von Polyacetalen durch Copolymerisation von

   (a) Glyoxylsäureestern mit

   (b) anderen copolymerisierbaren Monomeren

   in Gegenwart von anionischen oder kationischen Polymerisationsinitiatoren und gegebenenfalls Einführung von stabilen Endgruppen und gegebenenfalls Hydrolyse der in das Copolymerisat einpolymerisierten Monomeren (a), dadurch gekennzeichnet, daß man als Monomere (b) cyclische, von Diolen abgeleitete Formale, Homopolymerisate des Formaldehyds, Trioxepan oder Mischungen dieser Verbindungen einsetzt, wobei bis zu 50 Gew.-% dieser Gruppe von Monomeren durch andere übliche copolymerisierbare Monomere ersetzt sein können.

2. Verfahren nach Anspruch 1, dadurch gekennzeichnet, daß man als Monomere (b) Dioxolan, Butandiolformal und/oder Trioxan einsetzt.

3. Verfahren nach Anspruch 1 oder 2, dadurch gekennzeichnet, daß man als andere übliche copolymerisierbare Monomere (c) Epoxide, Aldehyde mit mindestens 2 C-Atomen, Tetrahydro-. furan und/oder $C_2$- bis $C_4$-Olefine einsetzt.

4. Verfahren nach einem der Ansprüche 1 bis 3, dadurch gekennzeichnet, daß man an die Enden der Polymerisatketten chemisch stabile Gruppen anlagert, so daß die Polyacetale gegen Abbau im alkalischen pH-Bereich stabilisiert sind.

5. Verwendung der nach den Ansprüchen 1 bis 4 erhältlichen Polyacetale als Zusatz zu phosphatarmen und phosphatfreien Wasch- und Reinigungsmitteln, als Mittel zur Wasserbehandlung und als Dispergiermittel für feinteilige

Stoffe.

**6.** Polyacetale, dadurch gekennzeichnet, daß sie erhältlich sind durch anionisch oder kationisch initiierte Polymerisation von

(a) Glyoxylsäureestern mit

(b) cyclischen, von Diolen abgeleiteten Formalen mit Ausnahme von solchen cyclischen Formalen, die sich von 1,2-Diolen ableiten, wobei gegebenenfalls bis zu 50 Gew.-% dieser Gruppe von Monomeren durch andere übliche copolymerisierbare Monomere ersetzt sein können, und

gegebenenfalls Einführung von stabilen Endgruppen und gegebenenfalls Hydrolyse der Estergruppen der in die Copolymerisate einpolymerisierten Monomeren (a).

**Claims**

**1.** A process for preparing polyacetals by copolymerization of

(a) glyoxylic esters with
(b) other copolymerizable monomers

in the presence of anionic or cationic polymerization initiators, with or without the introduction of stable end groups and with or without hydrolysis of the copolymerized units of monomer (a) present in the copolymer, which comprises using as monomers (b) cyclic formals derived from diols, homopolymers of formaldehyde, trioxepane or mixtures thereof, although up to 50 % by weight of this group of monomers may be replaced by other customary copolymerizable monomers.

**2.** A process as claimed in claim 1, wherein dioxolane, butanediol formal and/or trioxane are used as monomers (b).

**3.** A process as claimed in claim 1 or 2, wherein the other customary copolymerizable monomers used are (c) epoxides, aldehydes having at least 2 carbon atoms, tetrahydrofuran and/or $C_2$-$C_4$-olefins.

**4.** A process as claimed in any of claims 1 to 3, wherein the ends of the polymer chains have added to them chemically stable groups to confer stability on the polyacetals against degradation at an alkaline pH.

**5.** The use of the polyacetals obtainable as claimed in claims 1 to 4 as additive in reduced-phosphate and phosphate-free detergents and cleaners, as water treatment agent, and as dispersant for finely divided substances.

**6.** Polyacetals obtainable by anionically or cationically initiated polymerization of

(a) glyoxylic esters with
(b) cyclic formals derived from diols with the exception of those cyclic formals derived from 1,2-diols, although if desired up to 50 % by weight of this group of monomers can be replaced by other customary copolymerizable monomers,

with or without the introduction of stable end groups and with or without hydrolysis of the ester groups of the copolymerized units of monomer (a) present in the copolymers.

**Revendications**

**1.** Procédé de préparation de polyacétals par copolymérisation

a) d'esters d'acide glyoxylique avec
b) d'autres monomères copolymérisables,

en présence d'amorceurs de polymérisation anioniques ou cationiques, introduction éventuelle de groupements

terminaux stables et hydrolyse éventuelle des monomères (a) contenus en liaison polymère dans le produit de copolymérisation, caractérisé en ce que l'on utilise, comme monomères (b), des formals cycliques dérivés de diols, des homopolymères du formaldéhyde, du trioxépanne ou des mélanges de ces composés, jusqu'à 50% en poids des monomères de ce groupe pouvant être remplacés par d'autres monomères copolymérisables usuels.

**2.** Procédé selon la revendication 1, caractérisé en ce que l'on utilise, comme monomères (b), du dioxolanne, du butanediolformal et/ou du trioxanne.

**3.** Procédé selon la revendication 1 ou 2, caractérisé en ce que l'on utilise, comme autres monomères copolymérisables usuels (c), des époxydes, des aldéhydes à 2 atomes de carbone au moins, du tétrahydrofuranne et/ou des oléfines en $C_2$-$C_4$.

**4.** Procédé selon l'une quelconque des revendications 1 à 3, caractérisé en ce que l'on fixe par addition, aux extrémités des chaînes du polymère, des groupements chimiquement stables, de sorte que les polyacétals soient stabilisés contre la dégradation dans la plage alcaline du pH.

**5.** Utilisation des polyacétals obtenus selon l'une quelconque des revendications 1 à 4 comme additif à des produits de lavage et de nettoyage pauvres en phosphates et dépourvus de phosphates, comme agent de traitement des eaux et comme dispersant pour des substances en fines particules.

**6.** Polyacétals, caractérisés en ce qu'ils sont obtenus par polymérisation amorcée par voie anionique ou cationique

a) d'esters d'acide glyoxylique avec
b) des formals cycliques dérivés de diols, à l'exception des formals cycliques qui dérivent de 1,2-diols, jusqu'à 50% en poids des monomères de ce groupe pouvant être éventuellement remplacés par d'autres monomères copolymérisables usuels,

introduction éventuelle de groupements terminaux stables et hydrolyse éventuelle des groupements ester des monomères (a) contenus en liaison polymère dans le produit de copolymérisation.